# EUROPEAN PATENT SPECIFICATION

(11) **EP 0 594 185 B1**
(45) Date of publication and mention of the grant of the patent: **23.01.2002**
(21) Application number: 93117144.1
(22) Date of filing: 22.10.1993
(51) Int. Cl.: H04N 1/32

(54) **Communication system**
Kommunikationsanlage
Système de communication

(30) Priority: 22.10.1992 JP 28416592; 02.12.1992 JP 32289192
(43) Date of publication of application: 27.04.1994
(73) Proprietor: Hitachi, Ltd., Chiyoda-ku, Tokyo 101 (JP)
(72) Inventor: Hori, Yasuro, Katsuta-shi, Ibaraki 312 (JP); Nakamura, Kouzou, Hitachioota-shi, Ibaraki 313 (JP); Kuzunuki, Soshiro, Katsuta-shi, Ibaraki 312 (JP); Nakamura, Toshiaki, Hitachi-shi, Ibaraki 316 (JP)
(74) Representative: Beetz & Partner Patentanwälte

(56) References cited:
- JP-A- 3 101 368
- US-A- 4 058 838
- VEHICULAR TECHNOLOGY SOCIETY 42ND VTS CONFERENCE FRONTIERS OF TECHNOLOGIE May 1992 , DENVER, CO, US pages 89 - 92 KAWABE ET AL 'ERROR- FREE GROUP 3 FACSIMILE TERMINAL FOR CELLULAR MOBILE TELEPHONE CIRCUIT'

## Description

The invention relates to a communications system comprising communications terminals such as a business or a home use facsimile, in particular to a radio communications system.

In general, the facsimile communications are performed through a wire-link public telephone line. However, a facsimile having radio communication functions is introduced in Japanese Patent Laid-Open No. JP-A-1051754 (1989) and No. JP-A-4090664 (1992). The communication between a facsimile and that installed on a moving train or automobile use is sometimes interrupted due to the occurrence of phasing or the interference between radio waves. For a portable telephone, communicating with a facsimile installed on a running automobile, the communication seems to continue, but actually it is often discontinued. As for communications by voice, an interrupted communication can be compensated by voices caught before and after the voices that cannot be caught. When you cannot understand what the talker is talking about, you can ask the talker to repeat it again and again. So, almost no problem will arise from such voice communications. In the case of the communications system introduced in Japanese Patent Laid-Open No. JP-A-3101368 (1991), when a communication is interrupted, the receiver saves the interrupted information. Then, the receiver notifies the transmitter of the interrupted point and restarts the communication at the interrupted point.

The facsimile communications protocol (group 3 protocol) does not allow communications to be interrupted. If interrupted, it is regarded as a communication disabled error. Actually, to cope with such an error, the subject automobile stops at a place with better conditions of radio wave transmission. In order to enable communications from/to a moving object, a communications system is introduced on pages 152 and 51 through 54 of "Dedicated DSP Applied Mobile Body Terminal" issued by Oki Denki Kaihatsu in October, 1991; the system comprises a facsimile in which a cellular modem is built in and a protocol changer. Data is sent from a cellular telephone exchange through a public telephone line to individual facsimiles equipped with a protocol changer.

The prior art can not solve the following problems, however.
1) The facsimile communication is disabled during moving due to radio wave interferences caused by radio wave interference phasing, etc. if the conventional G3 protocol is used for the communication.
2) The communication is enabled with a dedicated protocol that is tolerant of radio wave interruptions or with its own protocol. However, no communication with general facsimiles is possible. Thus, the communication range is limited.
3) In the case of a communications system in which the receiver notifies the transmitter of the interrupted point when the communication is interrupted, the system has no function to discriminate the subject communication from others if there are two or more communications operated. If there are two or more interrupted communication items, therefore, the target interrupted point cannot be known. In order to cope with this problem, the communication must be restarted without fail just after it is interrupted.
4) In this case, the receiver must notify the transmitter of this situation and bear the expense. In addition, the transmitter must be equipped with a large memory to restore the interrupted information according to the interrupted point or it must be equipped with complicated scanning functions to re-read the transmitted data starting at the interrupted point in order to judge the interrupted point.

The paper "Error-Free Group 3 Facsimile Terminal for Cellular Mobile Telephone Circuit" presented at the 42nd Conference of the Vehicular Technology Society, May 1992, pages 89-92, discloses a facsimile terminal for cellular mobile use. Once a communication is established, information relating to non-standard facilities (NSF) and relating to digital identification (DIS) is exchanged.

US-A-4,058,838 discloses a packet-switched facsimile communications system having handshake capabilities and being able to use different protocols.

It is the object of the invention to provide a communications system capable of minimizing communication overhead due to communication interruption.

This object is accomplished in accordance with the features of claim 1. Dependent claims are directed on preferred embodiments of the invention.

In order to achieve the purpose, this invention allows its original communications protocol that is tolerant of radio wave interruptions to be installed in two or more mobile communications terminals and the communication controller in the base station for communications. This invention also allows the communications terminals to have a function to change protocols between the said original communications protocol and general communications protocols, as well as a function to transfer information to general communications terminals connected to public telephone lines. In addition, the communications terminal and the communications system mentioned in this invention also have a means to exchange the subject communication peculiar discrimination information with the base station respectively when the communication is restarted after an interruption, as well as a means to exchange the information of the interrupted point to eliminate the load of the public telephone line or the receiver of the mobile object.

In the case of a communication between a communications terminal connected to a public telephone line and a moving communications terminal, information is transmitted first from the communications terminal connected to the public telephone line to the communications controller in the base station using a general protocol. The general protocol is changed to the original one in the communications controller. After this, an information is transmitted from the base station to the moving communications terminal as radio waves. On the other hand, when the moving communications terminal transmits data to the controller in the base station using its original protocol, the communications controller in the base station changes the protocol to a general one and transfers data to the specified general communications terminal through a public telephone line. If the line of the communication with a moving communications terminal is disconnected and connected soon, the transmitter transmits communication discrimination information to the receiver to restart the communication and requests the receiver to transmit the interrupted point information. The receiver then transmits the requested information to the transmitter, then restarts the transmission at the interrupted point. Thus, even when there are two or more communications interrupted, the communications can be restarted just as required. And, since the transmitter notifies the receiver when the communication is to be restarted, the receiver is free from the burden for this processing.

### BRIEF DESCRIPTION OF DRAWINGS

Fig. 1 shows a system configuration usable in an embodiment of this invention.

Fig. 2 shows a radio facsimile terminal configuration usable with this invention.

Fig. 3 shows a communications controller configuration usable in an embodiment of this invention.

Fig. 4 explains a general communications protocol.

Fig. 5 explains a dedicated communications protocol usable in this invention.

Fig. 6 shows a data block length.

Fig. 7 shows another system configuration usable with this invention.

Fig. 8 shows a facsimile terminal configuration usable with the this invention.

Fig. 9 shows the connection between a radio facsimile terminal and a portable telephone.

Fig. 10 shows another configuration of a communications controller usable with this invention.

Fig. 11 shows an embodiment of a facsimile terminal usable with this invention.

Fig. 12 shows an embodiment of a transmission control table usable with in this invention.

Fig. 13 shows an embodiment of a receiving control table usable with in this invention.

Fig. 14 explains a communication example 1.

Fig. 15 explains a communication example 2.

Fig. 16 explains an example of transmission.

Fig. 17 explains an example of receiving.

Fig. 18 explains an example of the first calling.

Fig. 19 explains an example of re-calling.

Fig. 20 explains an example of receiving the first call.

Fig. 21 explains an example of receiving re-calls.

Fig. 22 explains an embodiment of error detection and correction.

Fig. 23 explains the communications characteristics.

### ESCRIPTION OF THE PREFERRED EMBODIMENTS

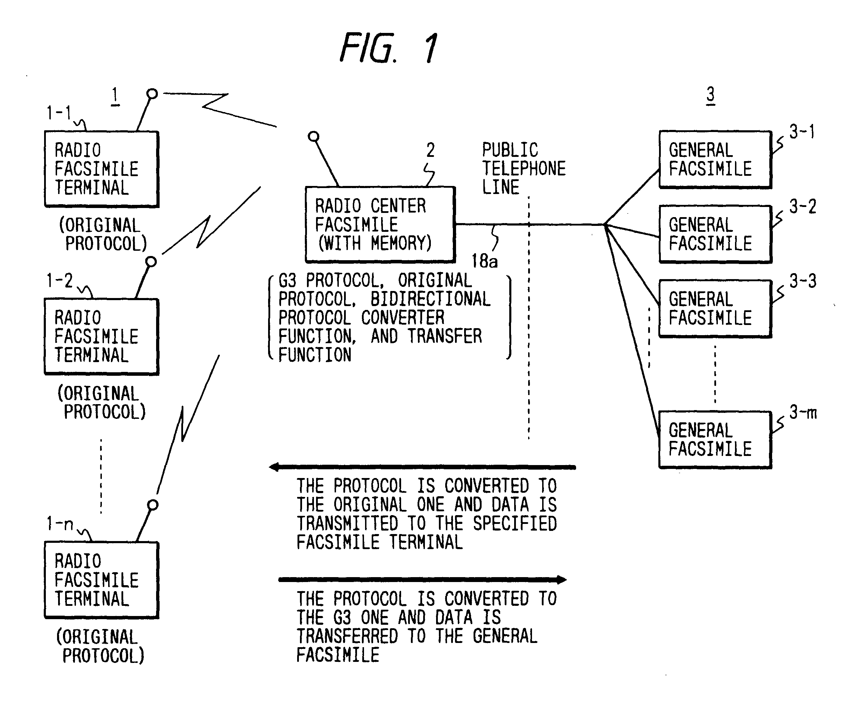

Fig. 1 shows a system configuration usable with this invention. The system comprises a mobile or a portable radio facsimile terminal group 1 that has its original communications protocol, a radio center facsimile 2 equipped with a function to change protocols between general protocols and the said original protocol and a function to transfer data to general facsimile terminals, and a facsimile terminal group 3 connected to a public telephone line.

In the configuration, the signals from the general facsimile terminal 3 are transmitted to the radio center facsimile 2 through a public telephone line. The general protocol is changed to the original protocol that is tolerant of radio wave interruptions, then the signals are transmitted to the radio facsimile terminal 1 as radio waves, completing the communication. The radio facsimile terminal 1 also has the original protocol.

On the other hand, the signals from the radio facsimile terminal 1 are transmitted to the radio center facsimile 2 as radio waves using the said original protocol. The radio center facsimile 2 changes the original protocol to a general protocol, and then transfers the signals to the specified general facsimile terminal 3 through a public telephone line and completes the communication.

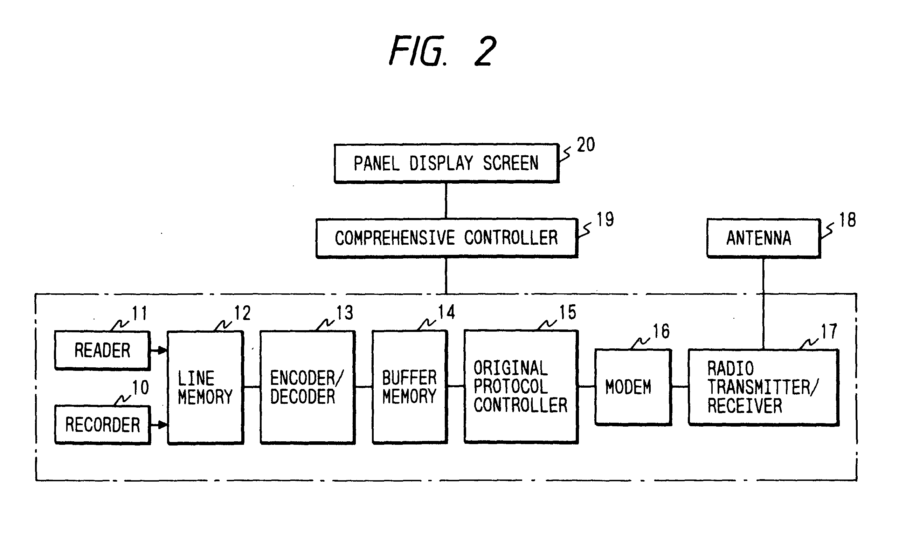

Fig. 2 shows the internal configuration of the radio facsimile terminal 1. Unlike ordinary facsimile terminals, this facsimile terminal 1 comprises an original protocol controller 15, a radio transmitter/receiver 17, and an antenna 18. In the case of a radio telephone installed on an automobile, the antenna 18 and the radio transmitter/receiver 17 can be eliminated from the configuration. The telephone has the following functions : The data read in the reader 11 is passed to the line memory 12, then encoded in the encoder/decoder 13, and then transmitted to the buffer memory 14. The protocol of the data from the buffer memory is changed to the radio protocol in the original protocol controller 15, and then the data is converted to analog signals through the modem 16 and converted to radio waves in the radio transmitter/ receiver 17. The radio waves are then transmitted to the radio center facsimile terminal 2 from the antenna 18. The radio waves from the radio center facsimile 2 are caught by the antenna 18 of the radio facsimile terminal 1, then converted to analog signals in the radio transmitter/receiver 17. The analog signals are then passed through the original protocol controller 15 and the buffer memory 14, restored to the original data in the encoder/decoder 13, passed through the line memory 12, and recorded in the recorder 10. The comprehensive controller 19 controls the information flow in each of the units, as well as controls the receiver information and the subject transmit information or the transmitter information and the received information to be displayed on the panel display screen 20.

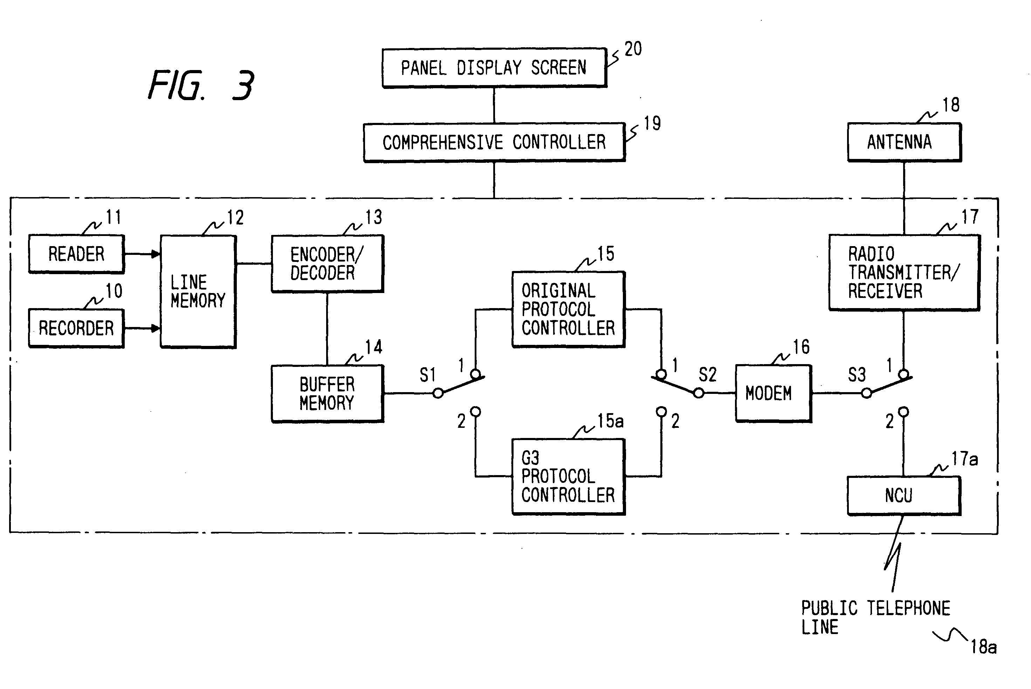

Fig. 3 shows the internal configuration of the radio center facsimile 2. In other words, when a communication is made with the radio facsimile terminal 1, 3 switches (S1, S2, and S3) are set to switching position No.1 to operate the original protocol controller 15. When a communication is made with a facsimile terminal connected to a public line, those switches are set to position No.2 to operate the general protocol controller 15a. When data is transmitted from the radio facsimile terminal 1 to the general facsimile terminal 3, the original protocol signals are transmitted first from the radio facsimile terminal 1 to the radio transmitter/receiver 17 of the radio center facsimile 2. Receiving the signals, the comprehensive controller 19 sets the said switches to 1 to pass the signals through the modem 16 and the original protocol controller 15 and saves the signals in the buffer memory. After this, the said switches are set to 2 according to the instruction from the comprehensive controller 19 to read the data from the buffer memory. The protocol is then changed to a general one in the general protocol controller 15a. The data is then passed through the modem 16 and the NUC 17a and entered to the public telephone line 18a and received by the general facsimile terminal 3. When data is transmitted from the general facsimile terminal 3 to the radio facsimile terminal 1 through the public telephone line 18a, it is only needed to reverse the said transmission procedure.

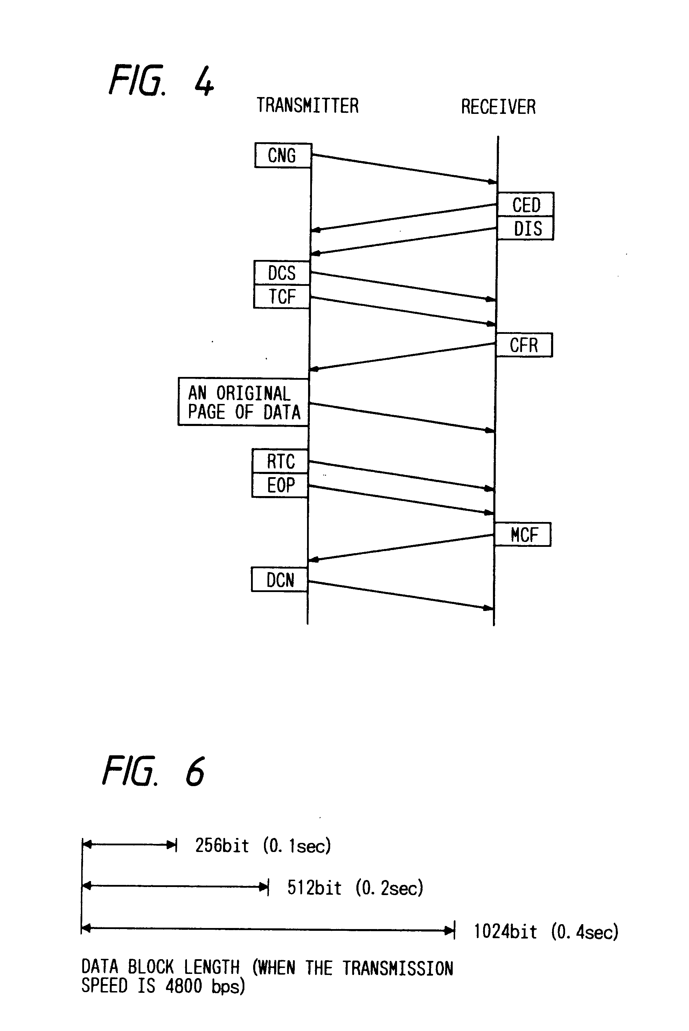

Fig. 4 shows the communications protocol for general facsimile terminals.

At first, when the receiver receives a CNG (calling sound) signal, which is a series of pre-procedures carried out from the transmitter, it transmits a CED (receiver discrimination signal) and a DIS (digital identification signal). Receiving the CED and DIS signals, the transmitter transmits a DCS (digital command signal) and a TCF (training check signal). After this, the receiver transmits a CFR (Clear For Receiving signal) to the transmitter, then an original page of data is transmitted. Completing the transmission, the transmitter transmits a RTC (Return To Control signal) and an EOP (End Of Protocol signal). Receiving the EOP signal, the receiver transmits a MCF (Message Confirmation signal) to the transmitter. The transmitter, receiving the MCF, transmits a DCN (disconnection signal) and terminates the communication. In the conventional general protocols, the data length to be transmitted at a time is limited to a page of original data. In the case of radio communications, they are often interrupted by interferences of other radio waves especially while the subject automobile is running. Since the data length to be transmitted at a time is as long as a page of original data, the communication interruption probability becomes high and the communication is often disabled.

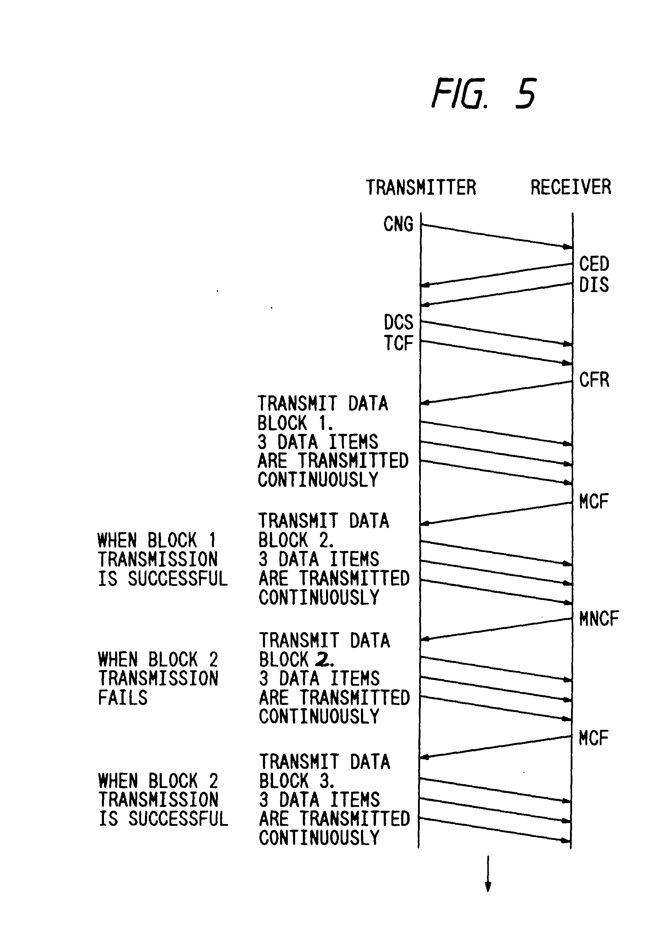

Fig. 5 shows an example of the original communications protocol usable with this invention. The steps up to CFR are the same as those shown in Fig. 4. In the step that comes just after the CFR, a page of transmit data is divided into two or more blocks and each block data is transmitted 3 times continuously. Each facsimile terminal and the center facsimile shown in this figure are equipped with an error detecting means respectively. When any one of the transmissions carried out 3 times continuously is successful, the receiver transmits an MCF and the transmitter transmits the next block data 3 times continuously. If all the 3-time transmissions fail, the receiver transmits an MNCF (message not-reached signal) and the transmitter transmits the same data 3 times again continuously. The error detecting means adopts the following 2 methods to detect errors; one of the methods judges an error when the transmit data or the data length is shorter or longer than the specified data length. Another method judges the transmission successful if two of the data patterns transmitted 3 times are identified to be the same, or it judges the transmission unsuccessful when the data patterns transmitted 3 times are completely the same. Repeating such a series of transmissions, the communication is continued on. The number of transmissions, which is 3 times in this case, is flexible; it can be increased when the radio wave condition is bad and reduced when the condition is good.

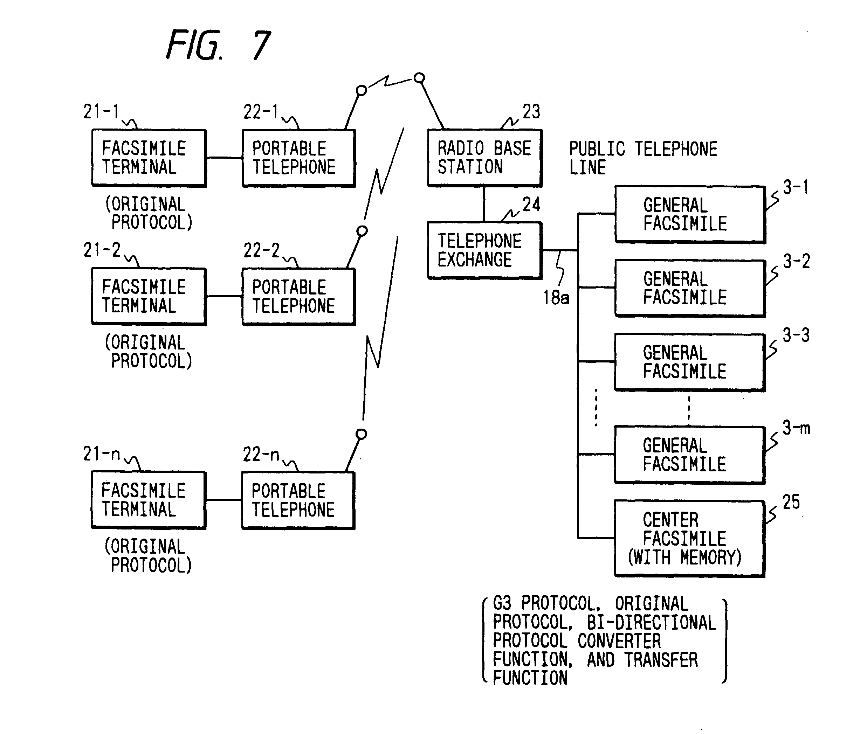

Fig. 6 shows examples of the data block length. When the communication speed is 4800 bps, the block length may be 256 bits/about 0.1 sec, 512 bits/about 0.2 sec, and 1024 bits/0.4 sec. In general, when the radio wave condition is bad, the block length may be set shorter and when the condition is good, it may be set longer. In other words, the block length and the number of transmissions per block can be selected properly according to the radio wave condition in order to assure effective communication. The original communications protocol used in this invention could be more tolerant of radio wave interferences and interruptions and enable communication with general facsimile terminals in the said system configuration.

Fig. 7 shows another system configuration usable with this invention.

In Fig. 7, the radio communication uses existing portable radio telephones 22, a base station 23 for radio telephones, a telephone exchange 24, a public telephone line 18a, and general facsimile terminals 3. Facsimile terminals 21 are connected to the portable radio telephones 22 on the moving objects, while the center facsimile 25, which is equipped with the protocol change function, the original communication protocol, the general communications protocols, and the transfer function, is connected to the general public line. The operation of this system is almost the same as that mentioned in the embodiment. The information from the facsimile terminal 21 on the moving object is transmitted together with the remote general facsimile telephone number to the center facsimile 25 through the existing communications systems 22 and 23, as well as through the existing telephone exchange 24. The original communications protocol is used for the communications up to the center facsimile 25, and the center facsimile 25 changes the original protocol to a general one to transfer the information to the remote general facsimile terminal 3. When information is transmitted from a general facsimile terminal, the information and the telephone number of the connected radio telephone 22 are transmitted to the center facsimile 25. The center facsimile 25 changes the general protocol to the original protocol, then transfers the information to the target radio telephone 22.

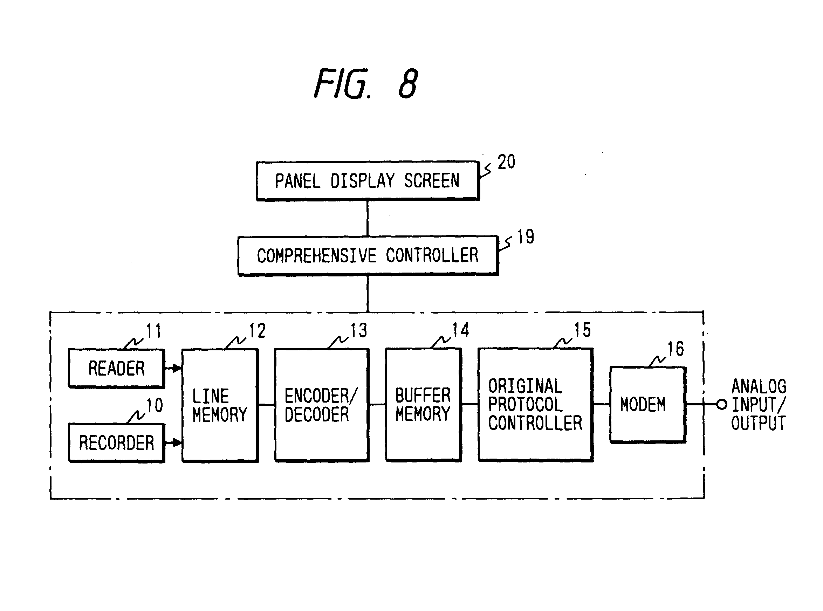

Fig. 8 shows the internal configuration of a facsimile terminal on a moving object used in the same system.

The same components as those in Fig. 2 are given the same code numbers also in this Fig. 8. Unlike ordinary facsimile terminals, this facsimile terminal has an original protocol controller 15, and the modem 16 has analog input/output functions.

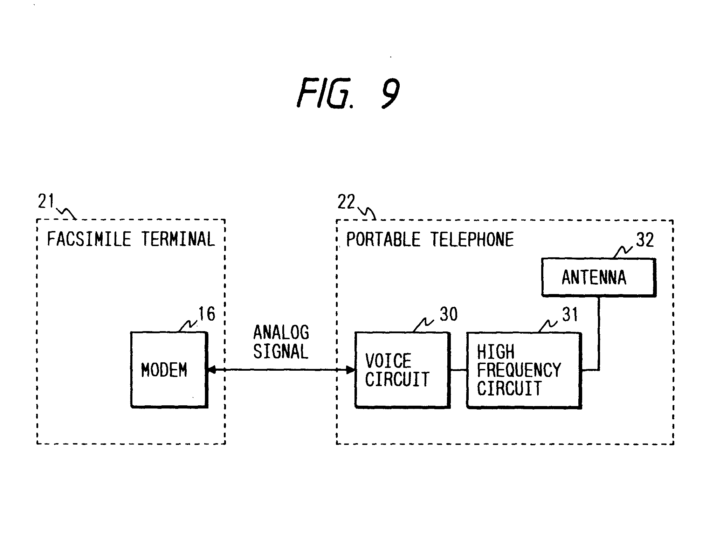

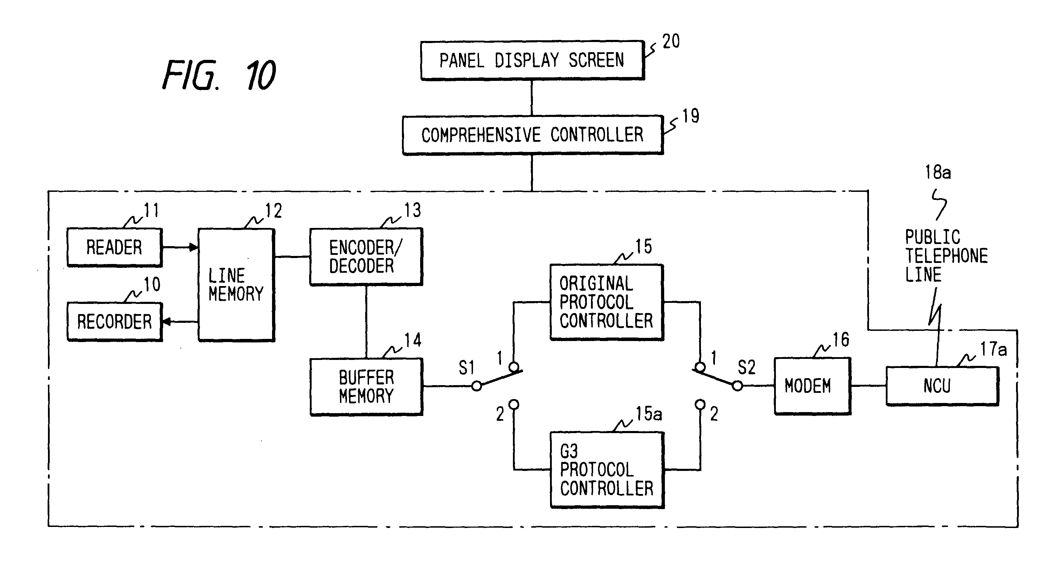

Fig. 9 shows a method of connecting a facsimile terminal to a portable telephone. The analog signals to/from the analog input/output of the modem 16 of the facsimile terminal shown in Fig. 8 are connected to the voice input/output 30 of the portable telephone. The analog signals are then converted to radio signals in the high frequency circuit 31 and transmitted to the radio base station through the antenna 32. Thus, the same operation as that of the radio facsimile terminal 1 shown in Fig. 2 can be assumed. Fig. 10 shows the internal configuration of the center facsimile 25 used in this system. Basically, the configuration is almost the same as that of the radio center facsimile shown in Fig. 3. The only difference is that not both the radio transmitter/ receiver and the switch 3 are needed in this configuration since a public telephone line is used for data input/output. Two switches (S1 and S2) are used to select the original protocol/general protocol appropriately to the communication with the facsimile terminal 21 on a moving object and the general facsimile terminal 3. The original protocol used in this case is the same as that shown in Fig. 5. This configuration allows existing radio communications systems to be used, as well as the communications to be made with the facsimile terminals and the center facsimile without the said radio communication items. The communication in this case is tolerant of radio wave interruptions.

In the cases mentioned above, the facsimile on a moving object uses only the original protocol. Of course, the system can have general protocols and select one of them appropriately to the radio wave condition. When general protocols are prepared together with the original one, the system can also be connected to a public telephone line to communicate with general facsimile terminals.

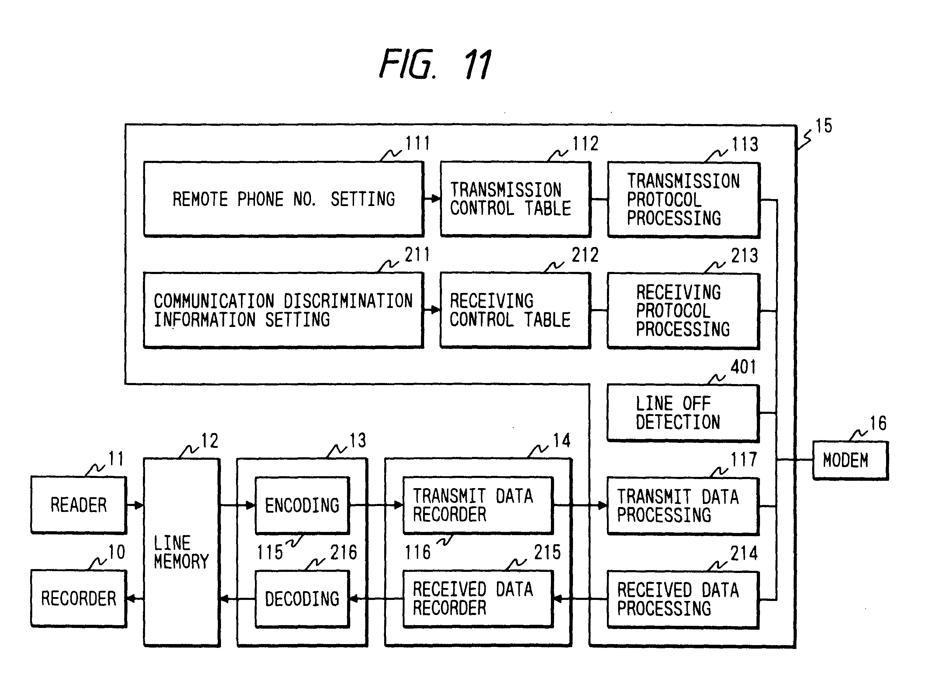

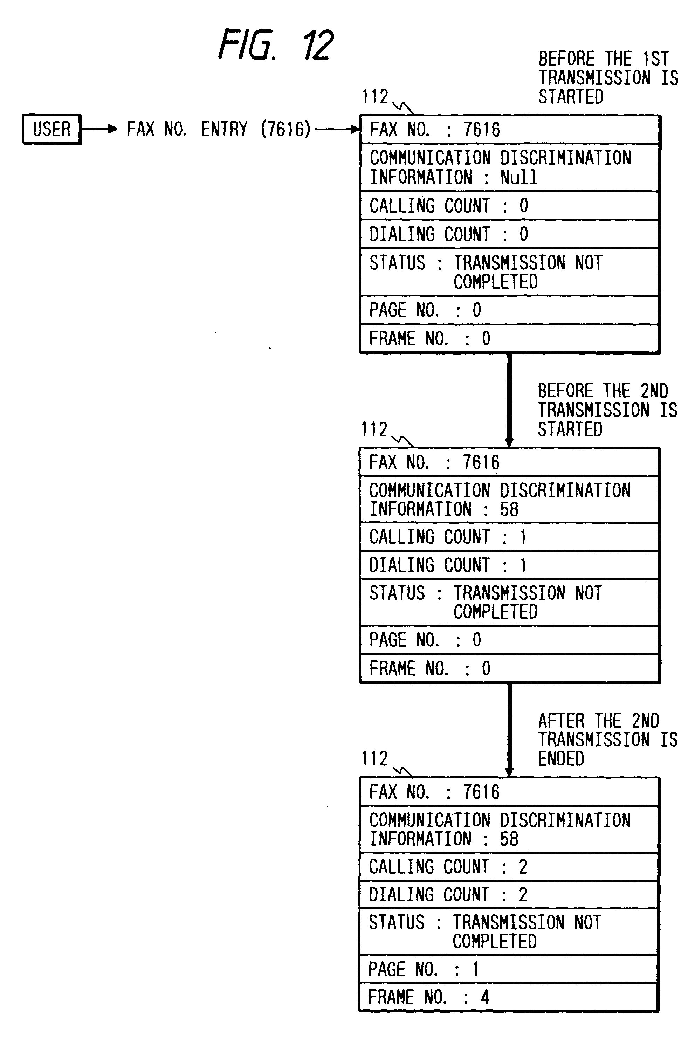

Next, one more embodiment will be explained for a communication processing to be restarted after an interruption using some figures shown below. Fig. 11 shows an example of the system configuration usable with this invention, that is, an example of a system such as a facsimile used to transfer images. It is possible to apply the system to every data communication system. The explanation will be started with the transmission functions of such a system. The remote number setter 111 in the original protocol controller 15 is used to set the target facsimile telephone number. The transmission control table 112 is a memory used to save the information to restart the subject communication after an interruption. The transmission protocol processor 113 is means for exchanging communication control signals with the receiver. The reader 11 is a means for scanning the originals to transmit and generate image signals. For example, a CCD line sensor is used to convert image signals to electric signals. The encoder 115 compresses the amount of the information as image signals entered from the reader 11. For example, MH and MR encoding systems adopted for facsimiles are well known as this encoder. The transmit data memory 116 is used to save encoded image signals. The memory is a semiconductor memory. The transmit data processor 117 transmits data to the receiver. Next, the receiving functions will be explained. The communication discrimination information setter 211 is a means to set communication discrimination information corresponding to a new communication start request from the transmitter. The receiving control table 212 is a memory used to save the information to restart the subject receiving after an interruption. The receiving protocol processor 213 is a means to exchange communication control signals according to the transmission requests. The received data processor 214 is a means to receive data from the transmitter. The received data memory is a means to save received encoded data. The memory is a semiconductor memory. The decoder 216 is a means to decode the received encoded data to original image signals. The recorder 10 is a means to print out image signals on recording paper. For example, a thermal printer is used as this recorder 10. The line OFF detector 401 is a function to detect line disconnections. The line OFF detecting condition is satisfied, for example, when a signal to indicate the end of communication is received, when the SYNC signal transmitted together with image information cannot be received for more than 5 seconds, or when a data frame cannot be received normally even after it is transmitted 3 times continuously. The modem 16 is a means to convert encoded data to analog signals and transmit/receive those signals through a communication line. Fig. 12 indicates the transmission control table. The encoded data for a sheet of original is divided into 8 frames and transmitted through two operations of transmission. The "FAX number" is a field used to save the remote telephone number entered to the remote number setter 111. If a call is retried after it is interrupted, the remote telephone is read from this area and the number is dialed automatically. There is no need for the user to dial the number again. The "communication discrimination information" is a field to save the communication discrimination information to be transmitted from the receiver at the first transmission time. The field value is "Null" before the first transmission is started. For the second and subsequent transmissions, the communication peculiar information discriminated from other communications is set in this field. If a communication is restarted after an interruption, the communication discrimination information is transmitted back to the receiver from this field. With this information, therefore, the receiver can recognize which communication is to be restarted. The "calling count" is a field used to indicate the number of callings including the first one issued in response to the communication discrimination information. If this count value exceeds the preset upper limit, re-calling is disabled. The "dialing count" is a field used to indicate the number of dialings made for a call. If this value exceeds the preset upper limit, no more connection request can be issued to the receiver. The "status" is a field used to indicate whether or not the subject encoded data items are all transmitted. The "page number" is a field used to indicate the page number received by the receiver normally through the previous transmission. The "frame number" is a field used to indicate the number of the frame received by the receiver normally through the previous transmission. Both the page number and the frame number are transmitted from the receiver when the subject communication is restarted.

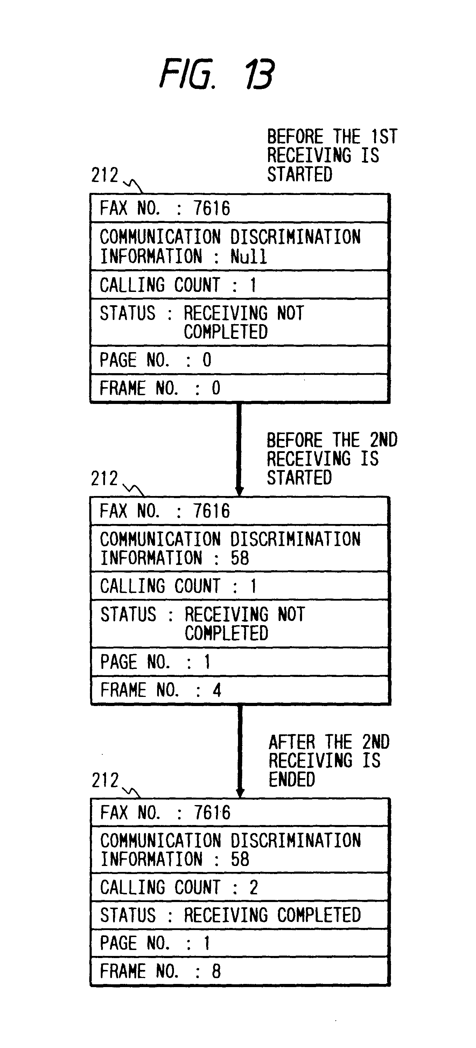

Fig. 13 shows an example of the receiving control table. In this example, the encoded data for a sheet of original data is divided into 8 frames and transmitted in two operations of transmission. The "FAX number" is a field used to save the telephone number of the receiver. The "communication discrimination information" is a field used to save the information, which is set in the communication discrimination information setter 211 when the first receiving is started. Thus, the field data is "Null" before the first receiving is started. For the second and subsequent communications, the information to discriminate the subject communication from others is saved in this field. If receiving is retried after an interruption, this field value is compared with the communication discrimination information transmitted from the transmitter. With this information, therefore, the receiver can judge which calling should be received. The "called count" is a field used to indicate the number of operations to receive calls including the first one in response to the same communication discrimination information. If this value exceeds the preset upper limit, receiving the calls in response to the same communication discrimination information is disabled. The "status" is a field used to indicate whether or not the subject encoded data items are all received. The "page number" is a field used to indicate the number of the page received by the receiver normally through the previous receiving. The "frame number" is a field used to indicate the number of the page received by the receiver normally through the previous receiving. The "frame number" is a field used to indicate the number of the frame received by the receiver normally through the previous receiving. Both the page number and the frame number are transmitted to the transmitter when the subject communication is restarted.

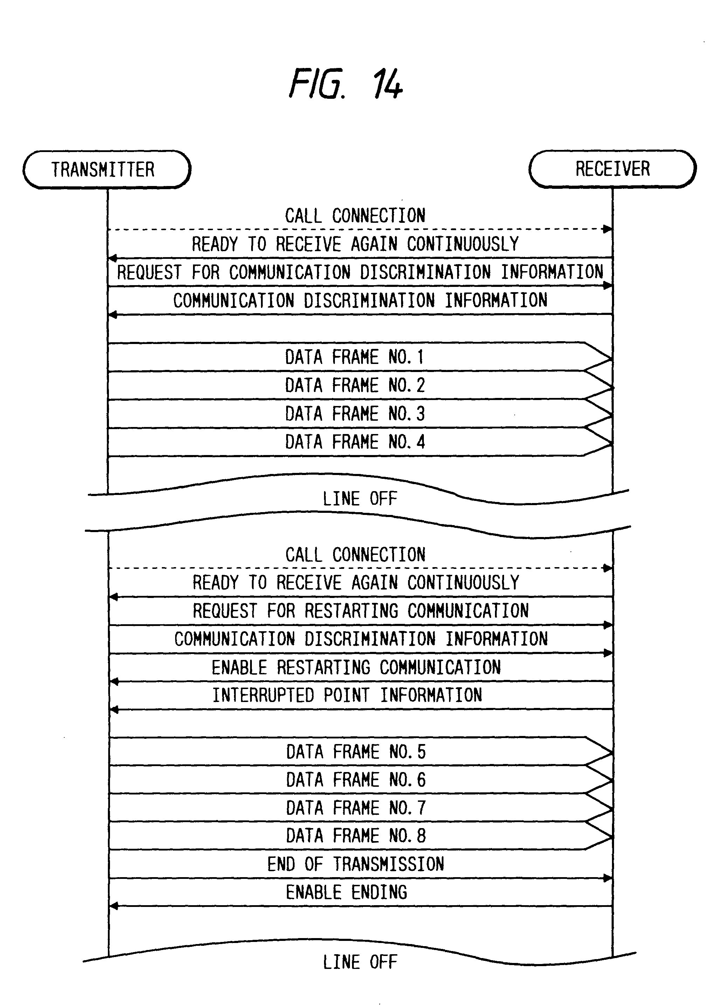

Fig. 14 shows an example of the communication according to this invention. In this example, the communication discrimination information is set by the receiver. The encoded data for a sheet of original, which is divided into 8 frames, is transmitted from the transmitter to the receiver as follows: The user sets the remote telephone number in the remote number setter 111. Then, the transmitter calls up the receiver. When the receiver receives the call and the line is connected, the receiver notifies the transmitter of its capability to receive data continuously after each interruption (receiving data with the original protocol of this invention that enables the communication to be restarted after each interruption). Since it is the first communication, the transmitter transmits a request for the communication discrimination information to the receiver. In response to this, the receiver sets the information to discriminate the subject communication from others and transmits the information to the transmitter. The communication discrimination information may be, for example, one of the serial numbers that is incremented one by one each time a new communication is received by the receiver. The transmitter transmits data in frames, each of which comprises 256 bytes and is given a serial number. If the SYNC signal to be transmitted together with image information cannot be detected for more than 5 seconds or when data cannot be received normally after it is transmitted 3 times continuously, then the line is disconnected and the communication is stopped. Detecting the line OFF, the transmitter calls up the receiver again to connect the line. In this case, the user is not requested to dial the remote number again. The calling is made automatically according to the FAX number saved in the transmission control table 112. Then, the receiver notifies the transmitter of its capability to restart the communication after each interruption. The transmitter transmits a request for restarting, as well as the target communication discrimination information. This communication discrimination information is the one saved in the communication discrimination information field of the transmission control table 112 when the first communication is started. Receiving this communication discrimination information, the receiver, for example, when two or more communications are interrupted at that time, can recognize which communication is to be restarted. After this, the receiver transmits the ready to restart signal, as well as the number of the final page (1 in this case) and the number of the final frame (4 in this case) that cannot be received normally through the first communication as the interrupted point information. In response to this, the transmitter starts transmission of the 5th and later frames read from the transmit data memory 116 according to the page number and the frame number received as the interrupted point information. If the image data up to the interrupted point in the communication discrimination information transmitted together with the restart request is not saved in the received data memory 216, then the receiver notifies the transmitter that restarting is impossible. Receiving this information, the transmitter requests the receiver for new communication discrimination information and restarts transmission at the beginning of the first page as a new communication. When the transmission of all the subject data items is finished normally, the transmitter transmits the end of the transmission signal. When all the data items are received normally, the receiver notifies the transmitter of being ready to complete. Receiving this signal, the transmitter disconnects the line.

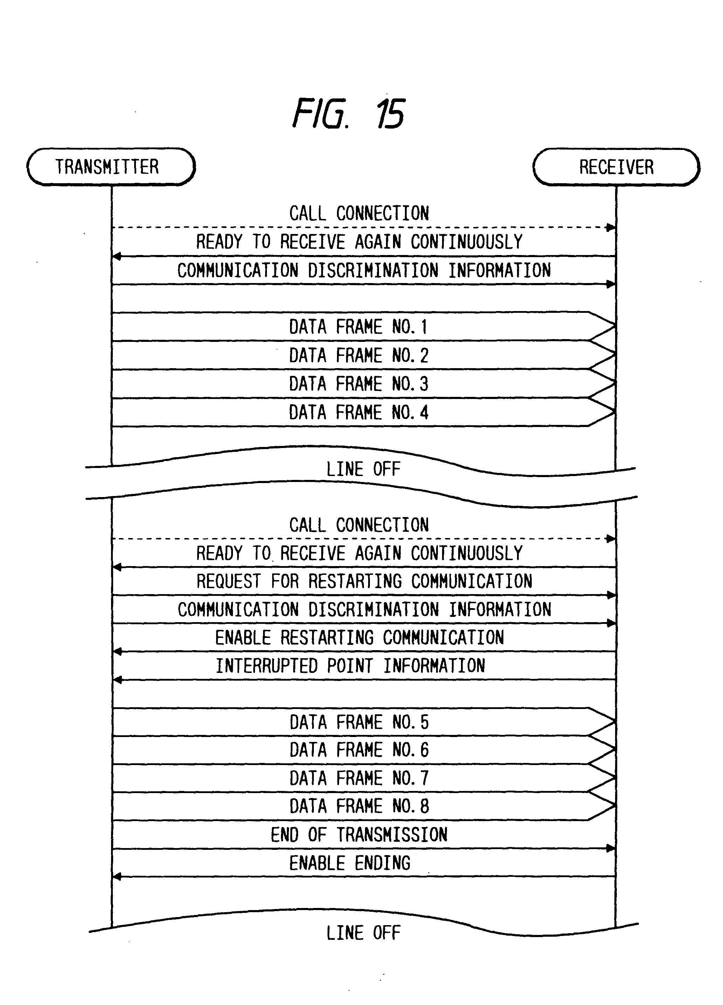

Fig. 15 shows another example of the communication according to this invention. In this example, the transmitter sets the communication discrimination information. When the user sets the remote dialing number (telephone number) in the remote number setter 111 and the receiver receives a call from the transmitter and the line is connected, the receiver notifies the transmitter of its capability to restart receiving after each interruption. The transmitter sets the information to discriminate the subject communication from others and transmits the information to the receiver, since it is the first transmission. The subsequent processings are the same as those shown in Fig. 14.

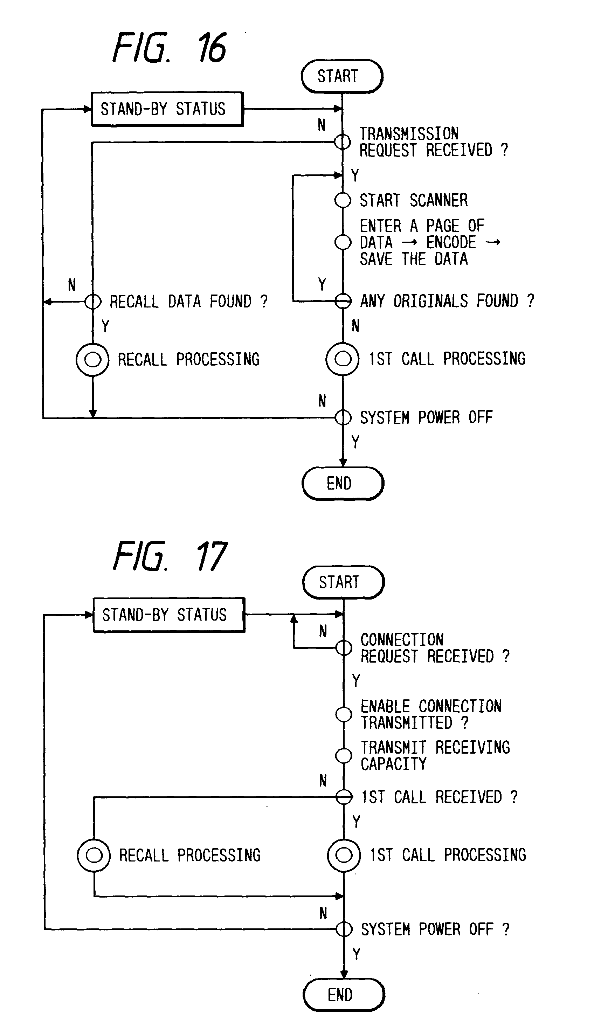

Fig. 16 shows an example of calling from the receiver. When the user sets a sheet of original data to transmit and enter the remote dialing number, the system judges that a transmission request is issued, thus actuates the reader 11 to read the original data. The read data is encoded in the encoder 115 and saved in the transmit data memory 116. When there are two or more sheets of original data, the said processings are repeated.

Then, the first call processing is executed. On the other hand, if there is no transmission request issued, but there is any data of which transmission is restarted because the communication is stopped due to line disconnection, then re-calling is tried. In other cases, the system stands by until the system power supply is turned OFF.

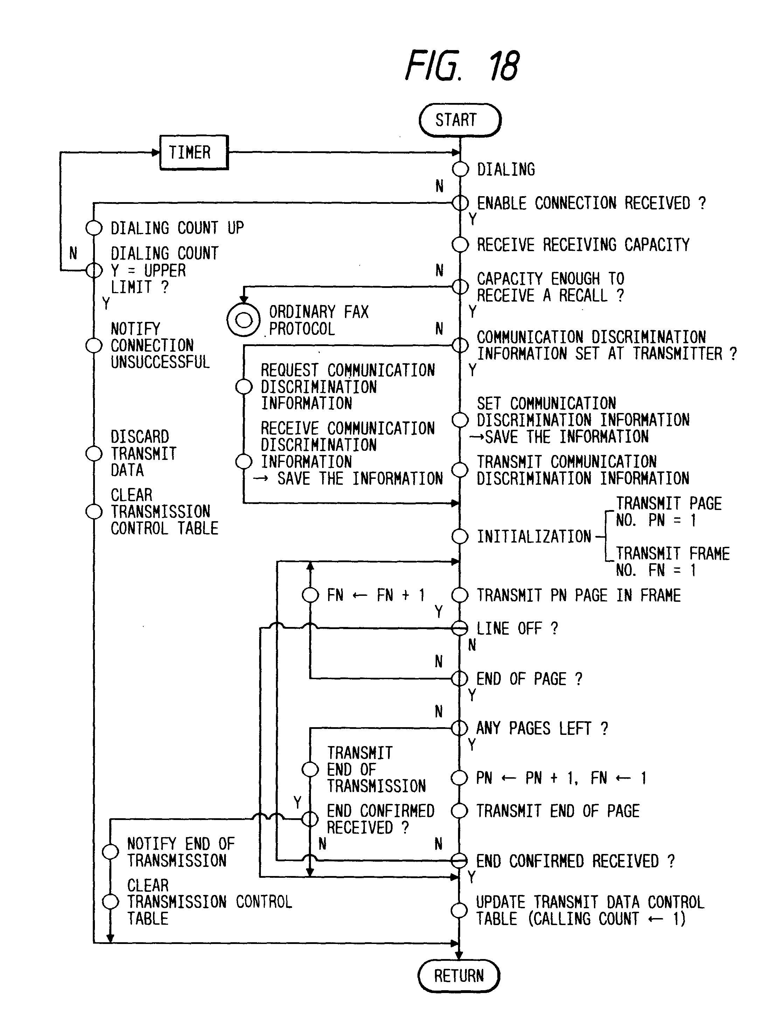

Fig. 18 shows an example of the first call processing. The dialing number saved in the FAX number field of the transmission control table 112 is dialed automatically to connect to the remote facsimile terminal. Then, the transmitter receives the information indicating whether or not the receiver has a function to restart the subject transmission after each interruption. If the receiver does not have the function, a general facsimile communication protocol such as G3 is used for the communication (the details of the protocol are omitted here). When the receiver has the function, either the transmitter or the receiver sets the communication discrimination information and notifies it to the other. If the transmitter sets the communication discrimination information, the transmitter saves the information in the communication discrimination information memory in the transmission control table 112 and transmits the information to the receiver. If the receiver sets the communication discrimination information, the transmitter requests the receiver for the communication discrimination information, and the transmitter receives and saves the information in the communication discrimination information memory in the transmission control table 112. After this, the transmitter initializes both the transmit page number and the transmit frame number, and starts the transmission of the coded data at the first frame in the first page. If the line is disconnected during this image data communication, the transmitter updates the transmission control table 112 and terminates the processing. The transmission control table 112 is updated, as shown in Fig. 12, so that the communication discrimination information may be updated from Null, which is set before the transmission is started, to 58 and the calling count may be updated from 0 to 1 respectively. This transmission control table 112 is also updated when the end confirmation signal cannot be received after the End of Page signal is transmitted, indicating that a page of data has been transmitted. If the line cannot be connected even when the dialing number is dialed, then the number is dialed at the intervals preset for the timer. If the dialing count reaches the preset upper limit, the "connection unsuccessful" is notified to the user. In this case, the transmit data in the transmit data memory 116 is discarded and the transmission control table is cleared.

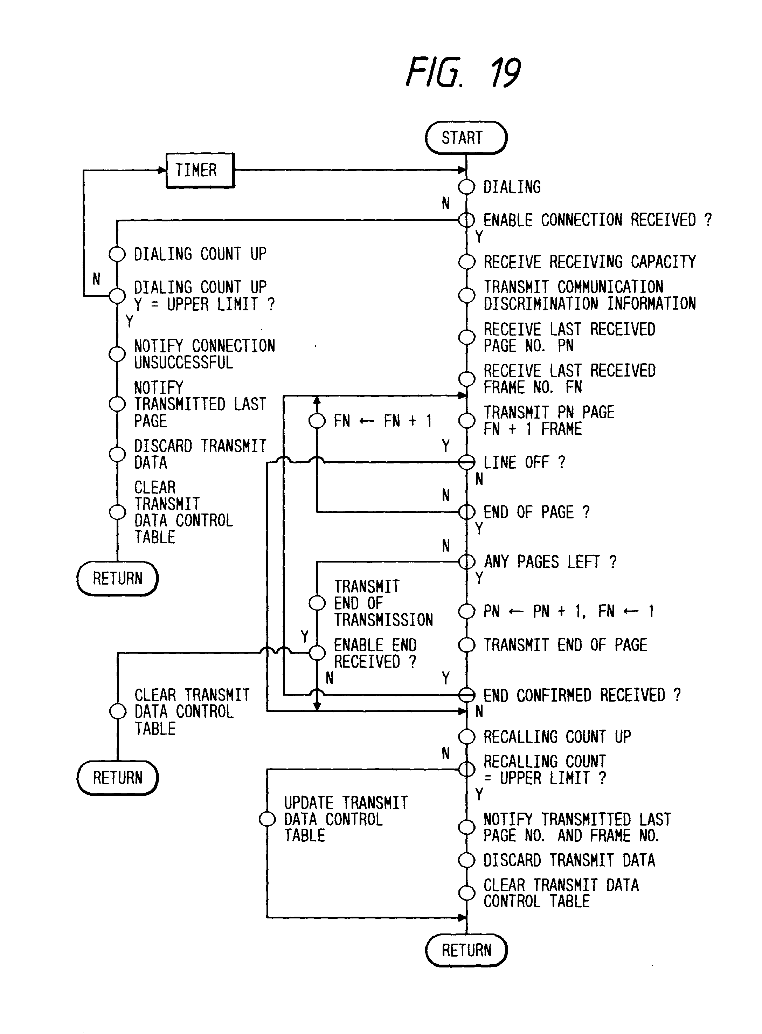

Fig. 19 shows an example of re-call processings. The dialing number saved in the FAX number field of the transmission control table 112 is dialed automatically. When the line is connected to the receiver, the transmitter confirms that the receiver can restart the subject communication after each interruption according to the information received from the receiver. Then, the transmitter transmits the communication discrimination information to receiver. The information is saved in the communication discrimination information memory in the transmission control table 112. The transmitter then receives the last page number PN and the frame number FN of the coded data received from the receiver in the first call processing. The transmitter then restarts the transmission of the coded data at the FN+1 frame in the PN page. If the line is disconnected during this transmission, the transmitter updates the transmission control table 112 and terminates the processing. The transmission control table is updated at this time as shown in Fig. 12 so that the calling count may be updated from 1, which is set before the second transmission is started, to 2. The transmission control table is also updated when the page end confirmation signal cannot be received after the End of Page signal is transmitted, notifying that a page of data has been transmitted. Re-calling is tried for a line re-connection except when the communication is ended normally. However, when the recalling count reaches the preset upper limit, the last page number and the last frame number set in the transmission control table are notified to the user and the transmit data in the transmit data memory 116 is discarded. Then, the transmission control table 112 is cleared. If a line cannot be connected when the number is dialed, the re-connection is retried at the intervals preset for the timer. When the dialing count reaches the preset upper limit, the connection unsuccessful is notified to the user, the transmit data in the transmit data memory 116 is discarded, and the transmission control table 112 is cleared.

Fig. 17 shows an example of the processings carried out by the receiver. Receiving a request for connection from the transmitter, the receiver transmits the Connection Enable signal and notifies the transmitter of its capability to restart the subject transmission after each interruption. Receiving the first call, the receiver begins the processing for the first call received. When not receiving the first call, the receiver begins the processing for a re-call received. In other cases, the receiver stands by until the system power supply is turned OFF.

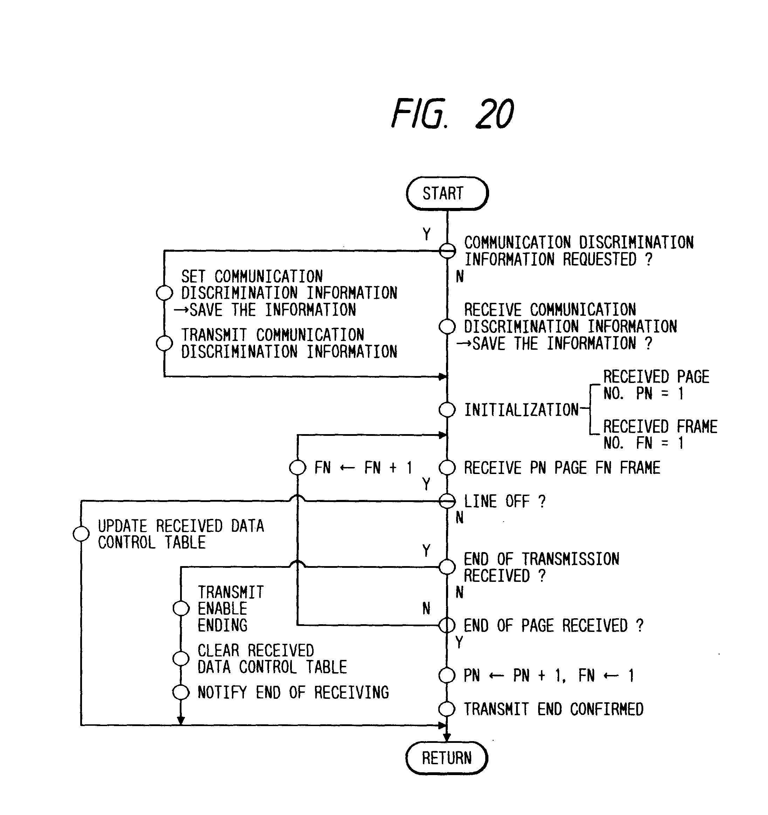

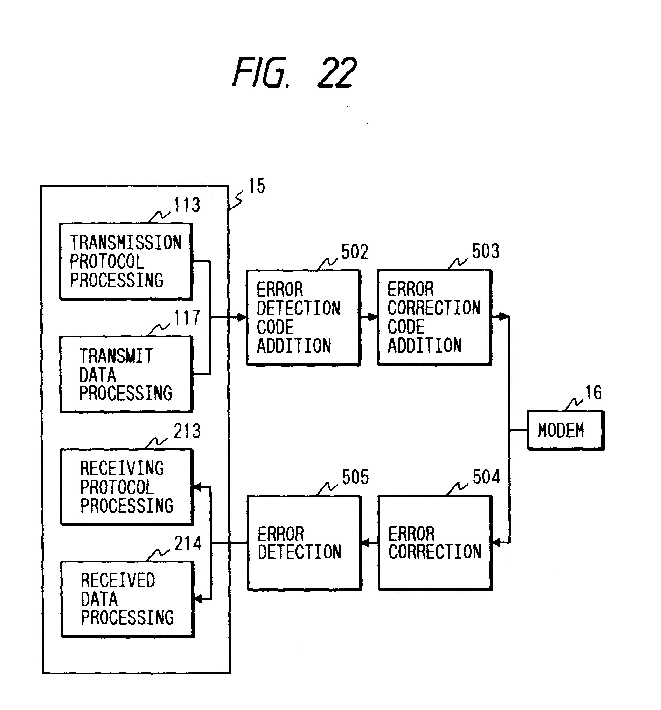

Fig. 20 shows an example of the processing for the first call received. When the transmitter asks for the communication discrimination information, the receiver sets the communication discrimination information and saves the information in the communication discrimination information memory in the receiving control table 212. Then, the receiver transmits the information to the transmitter. When the receiver receives the communication discrimination information from the transmitter, the receiver saves the information in the communication discrimination information memory in the receiving control table 212. Then, the receiver initializes both the received page number and the received frame number and begins receiving the coded data at the first frame in the first page. If the line is disconnected during the communication, the receiving control table 212 is cleared and the processing is ended. The receiving control table 212 is updated, as shown in Fig. 13, so that the communication discrimination information may be updated from Null, which is set before the first receiving is started, to 58 and the received calling count may be updated from 0 to 1 respectively. When receiving End of Transmission, the receiver transmits Ready to End to the transmitter and notifies the user of End of Receiving, then clears the receiving control table 212. After this, the data in the received data memory 116 is restored to image data in the decoder 216 and output from the recorder 10. When receiving End of Page, the receiver counts up the last received page number to PN+1 and clears the last frame number, then transmits the end confirmation signal to the transmitter.

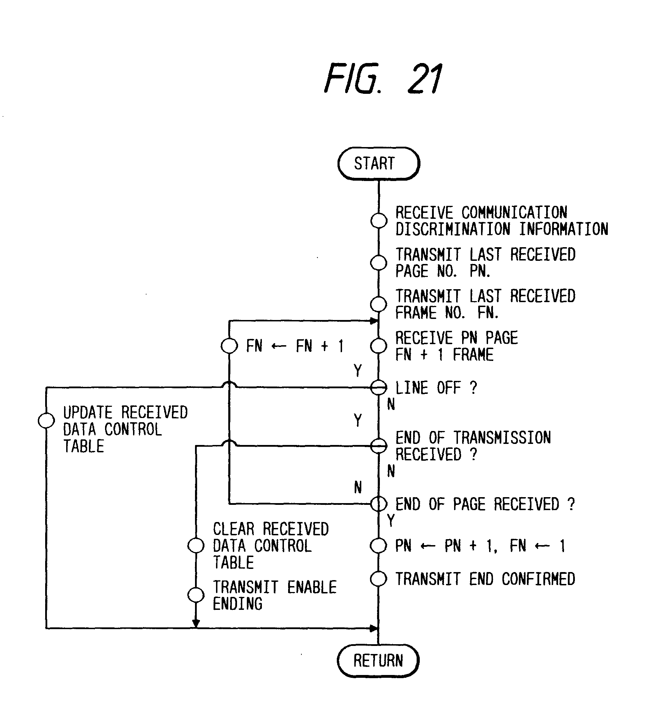

Fig. 21 shows an example of the processing for a re-call received. Receiving the communication discrimination information from the transmitter, the receiver transmits the last page number PN and the last frame number FN of the data received normally in the processings so far. Then, the receiver begins receiving coded data at the FN+1 frame in the PN page. If the line is disconnected during the communication, the receiver updates the receiving control table 212 and terminates the processing. The receiving control table is updated as shown in Fig. 13 so that the received calls count may be updated from 1, which is set before the second receiving is started, to 2. When receiving End of Transmission, the receiver transmits Ready to End to the transmitter and notifies the user of End of Receiving, then clears the received data control table 212. The data in the received data memory 215 is restored to image data in the decoder 216 and output from the recorder 10. When receiving End of Page, the receiver counts up the last received page number PN to PN+1, and clears the last frame number FN, then transmits the end confirmation signal to the transmitter.

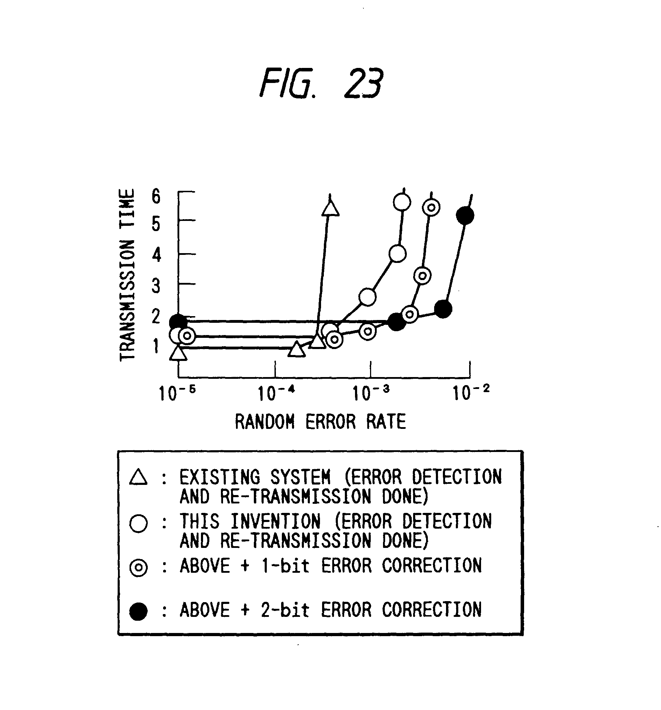

Fig. 22 shows an embodiment of error detection and correction for use in this invention. The original protocol controller 15 executes the original communication protocol of this invention. The error detection code adder 502 is a means to add an error detection code in units of multiple bits both to the image data transmitted from the transmit data processor 117 and the protocol signals transmitted from the transmission protocol processor 113. For example, a 2-byte error detection code is added to each data in units of 256 bytes just like the HDLC protocol. This 2-byte error code allows the receiver to detect whether or not an error exists in each data of 256 bytes. The error correction code adder 503 is a means to add a code for correcting an error in units of multiple bits. This error correction code allows the receiver to correct errors on the receiver side in units of multiple bits. For example, an 8-bit code is added to each data of 7 bits just like the BCH error correction code. The error corrector 504 is means for correcting received data errors using the code added in the error correction code adder 503. For example, if an 8-bit code is added for each data of 7 bits, then up to the 2-bit errors in the 7 bits can be corrected on the receiver side. Bit errors that occur at random can be corrected using this means. The error detector 505 requests the transmitter to re-transmit data strings when an error is detected, for example, in a 256-byte data string according to the error detection code added in the error detection code adder 502. If no error is detected, the error detector 505 passes the data, if it is image data, to the data processor 214. If it is protocol data (signals), the error detector 505 passes the signals to the received protocol processor 213. Thus, the said configuration can cope with communication interruptions, data random errors, and burst errors.

Fig. 23 shows the relative values of each communication system transmission time in relation to the random error rate. In case of the existing facsimile system equipped with the function to restart data transmission after it is interrupted with an error detected, the communication is disabled at an error rate of 1/5000. On the contrary, in the case of the communication system that can restart the subject transmission after each interruption caused by an error detected, the communication is continued on up to an error rate of 1/700. In addition, if the BCH single-bit error correction function that is realized by adding a 3-bit code to each data of 4 bits, then the communication can be assured up to an error rate of 1/500. If the BCH 2-bit error correction function that is realized by adding an 8-bit code to each data of 7 bits is added to the system, the communication can be assured up to an error rate of 1/200.

According to this invention, the communication is enabled between the communication terminal that has the said original protocol and the communication terminal connected to a general public telephone line. Even when the communication is interrupted, the user needs not set the remote telephone number again for re-connecting the line. According to the invention, when there are two or more communications occurring at the remote terminal, the communication discrimination information is notified to the remote terminal before restarting the subject communication.
Thus, the communication can be restarted precisely at the interrupted point. In addition, the numbers of the frames successfully transmitted before the communication is interrupted are recognized and the communication is restarted at the data frame just after the last transmitted frame, so it is not necessary to repeat the same communication from the first data frame.

## Claims

1. A communications system for transmitting and receiving information between a portable or mobile facsimile terminal (1-1, ..., 1-n) and a general facsimile terminal (3-1, ..., 3-m), which system comprises a communications controller (2) with the function of changing protocols, said communications controller sending calls on communications lines to transmit information to a terminal, and receiving calls from terminals on said communications lines to receive information,
**characterized in that**
said communications controller (2) has
- means for exchanging with a terminal each time a new information communication is started or restarted subject communication discrimination information for discriminating the started or restarted communication against another communication, and
- means for restarting a said communication by exchanging with said terminal said communication discrimination information and interruption point information after said communication has been interrupted and before it is restarted.

2. A communications system according to claim 1,
**characterized in that**
said means for exchanging communication discrimination information allows either of a transmitter terminal or a receiver terminal to send the communication discrimination information and notifiy the other terminal of the sent information.

3. A communications system according to claim 1,
**characterized in that** said means for exchanging communication discrimination information and interruption point information allows a transmitter terminal to notify a receiver terminal of the communication discrimination information and the receiver terminal to notify the transmitter terminal of the interruption point in a subject communication.

4. A communications system according to claim 1,
**characterized in that**
the communication of information between a transmitter terminal and a receiver terminal includes an auto error correction function and/or an auto error detection and re-transmission function.

5. A communications system according to claim 1,
**characterized in that**
said communications controller transmits information to a specified portable or mobile facsimile terminal by using a specific facsimile communications protocol including exchanging said communication discrimination information, after having received said information from a general facsimile terminal by using a general facsimile communications protocol.

6. A communications system according to claim 1, **characterized in that** said communications controller transmits information to a specified general facsimile terminal using a general facsimile communications protocol, after having received said information from a portable or mobile facsimile terminal by using a specific facsimile communications protocol including exchanging said communication discrimination information.

## Patentansprüche

1. Kommunikationssystem zum Senden und Empfangen von Informationen zwischen einem tragbaren oder beweglichen Faxanschluß (1-1, ..., 1-n) und einem allgemeinen Faxanschluß (3-1, ... 3-m), wobei das System eine Kommunikationssteuerung (2) aufweist, die eine Funktion des Änderns eines Protokolls hat, wobei die Kommunikationssteuerung zur Übertragung von Informationen an einen Anschluß Rufe über Kommunikationsleitungen schickt und zum Empfang von Informationen von Anschlüssen Rufe von den Kommunikationsleitungen empfängt.
**dadurch gekennzeichnet, daß**
die Kommunikationssteuerung (2) aufweist:
- eine Einrichtung, die jedesmal dann, wenn eine neue Kommunikation begonnen oder wiederbegonnen wird, mit einem Anschluß zugrundeliegende Kommunikationsunterscheidungsinformation austauscht, um die begonnene oder wiederbegonnene Kommunikation von anderen Kommunikationen zu unterscheiden, und
- eine Einrichtung zum Wiederbeginnen einer bzw. der Kommunikation durch Austauschen der Kommunikationsunterscheidungsinformation und einer Unterbrechungspunktinformation mit dem Anschluß, nachdem die Kommunikation unterbrochen wurde und bevor sie wiederaufgenommen wird.

2. Kommunikationssystem nach Anspruch 1, **dadurch gekennzeichnet, daß** die Einrichtung zum Austauschen von Kommunikationsunterscheidungsinformation es dem sendenden Anschluß oder dem empfangenden Anschluß ermöglicht, Kommunikationsunterscheidungsinformation zu senden, und dem anderen Anschluß die gesendete Information mitteilt.

3. Kommunikationssystem nach Anspruch 1, **dadurch gekennzeichnet, daß** die Einrichtung zum Austauschen von Kommunikationsunterscheidungsinformation und Unterbrechungspunktinformation es dem sendenden Anschluß erlaubt, einem empfangenden Anschluß die Kommunikationsunterscheidungsinformation mitzuteilen, und dem empfangenden Anschluß erlaubt, dem sendenden Anschluß den Unterbrechungspunkt der betreffenden Kommunikation mitzuteilen.

4. Kommunikationssystem nach Anspruch 1, **dadurch gekennzeichnet, daß** die Kommunikation der Informationen zwischen einem sendenden Anschluß und einem empfangenden Anschluß eine automatische Fehlerkorrekturfunktion und/oder eine automatische Fehlererfassung und Übertragungswiederholungsfunktion aufweist.

5. Kommunikationssystem nach Anspruch 1, **dadurch gekennzeichnet, daß** die Kommunikationssteuerung Informationen an einen bestimmten tragbaren oder beweglichen Faxanschluß unter Verwendung eines bestimmten Fax-Kommunikationsprotokolls sendet, was den Austausch der Kommunikationsunterscheidungsinformation einschließt, nachdem von einem allgemeinen Faxanschluß Informationen unter Verwendung eines allgemeinen Fax-Kommunikationsprotokolls empfangen wurde.

6. Kommunikationssystem nach Anspruch 1, **dadurch gekennzeichnet, daß** die Kommunikationssteuerung Informationen an einen bestimmten allgemeinen Faxanschluß unter Verwendung eines allgemeinen Fax-Kommunikationsprotokolls sendet, nachdem er die Informationen von einem tragbaren oder beweglichen Fax-Anschluß unter Verwendung eines speziellen Fax-Kommunikationsprotokolls einschließlich Austausch der Kommunikationsunterscheidungsinformation empfangen hat.

## Revendications

1. Système de communications pour émettre et recevoir des informations entre un terminal de télécopie portable ou mobile (1-1, ..., 1-n) et un terminal de télécopie général (3-1, ..., 3-m), lequel système comporte un contrôleur de communications (2) ayant la fonction de changer de protocoles, ledit contrôleur de communications envoyant des appels sur des lignes de communications pour transmettre des informations à un terminal, et recevant des appels à partir de terminaux sur lesdites lignes de communications pour recevoir des informations,
**caractérisé en ce que**
ledit contrôleur de communications (2) a
- des moyens pour échanger avec un terminal, à chaque fois qu'une nouvelle communication d'informations est lancée ou relancée, des informations de discrimination de communication cible pour discriminer la communication lancée ou relancée vis-à-vis d'une autre communication, et
- des moyens pour relancer ladite communication en échangeant avec ledit terminal lesdites informations de discrimination de communication et des informations de point d'interruption après que ladite communication a été interrompue et avant qu'elle ne soit relancée.

2. Système de communications selon la revendication 1,
**caractérisé en ce que**
lesdits moyens pour échanger des informations de discrimination de communication permettent à un terminal émetteur ou à un terminal récepteur d'envoyer les informations de discrimination de communication et de notifier à l'autre terminal les informations envoyées.

3. Système de communications selon la revendication 1,
**caractérisé en ce que** lesdits moyens pour échanger des informations de discrimination de communication et des informations de point d'interruption permettent à un terminal émetteur de notifier à un terminal récepteur les informations de discrimination de communication et permettent au terminal récepteur de notifier au terminal émetteur le point d'interruption dans une communication cible.

4. Système de communications selon la revendication 1,
**caractérisé en ce que**
la communication d'informations entre un terminal émetteur et un terminal récepteur inclut une fonction de correction d'erreurs automatique et/ou une fonction de détection d'erreurs et de retransmission automatique.

5. Système de communications selon la revendication 1,
**caractérisé en ce que**
ledit contrôleur de communications transmet des informations à un terminal de télécopie portable ou mobile spécifié en utilisant un protocole de communications de télécopie spécifique incluant l'échange desdites informations de discrimination de communication, après avoir reçu lesdites informations à partir d'un terminal de télécopie général en utilisant un protocole de communications de télécopie général.

6. Système de communications selon la revendication 1, **caractérisé en ce que** ledit contrôleur de communications transmet des informations à un terminal de télécopie général spécifié en utilisant un protocole de communications de télécopie général, après avoir reçu lesdites informations à partir d'un terminal de télécopie portable ou mobile en utilisant un protocole de communications de télécopie spécifique incluant l'échange desdites informations de discrimination de communication.
